# EUROPÄISCHE PATENTANMELDUNG

(11) **EP 0 567 873 A2**
(43) Veröffentlichungstag der Anmeldung: **03.11.1993**
(21) Anmeldenummer: 93106272.3
(22) Anmeldetag: 17.04.1993
(51) Int. Cl.: B65D 71/70

(54) **Mehrwegverpackung**

(30) Priorität: 27.04.1992 DE 9205928 U
(71) Anmelder: "WERTPAK" WIEDERVERWERTBARE VERPACKUNGSSYSTEME GmbH, D-13599 Berlin (DE)
(72) Erfinder: Röhl, Jürgen, W-1000 Berlin 20 (DE)
(74) Vertreter: von Raffay, Vincenz, Dipl.-Ing.

(57) **Zusammenfassung**

Die Mehrwegverpackung besteht aus mindestens einer Flasche (6) und einem kastenförmigen Tray (1) zur Aufnahme der Flaschen. Die Höhe des Trays ist geringer als diejenige der Flasche und mit Vertiefungen (2) zur Aufnahme der Flaschen versehen. Es handelt sich hierbei also um eine Mehrwegverpackung, wobei dem Verbraucher und sonstigen, mit der Verpackung beschäftigten Personen, eine "Erkennung" ermöglicht werden soll, ob die richtige Flasche für den entsprechenden Tray vorhanden ist. Hierzu ist jede Flasche mit einem eingezogenen rotationssymmetrischen Boden (8) (female) versehen, und der Boden jeder Vertiefung (2) des Trays weist eine der Form des eingezogenen Flaschenbodens (8) angepaßten Vorsprung (5) (male) auf. Dieser Vorsprung auf dem Boden (4) der Vertiefung (2) des Trays ist in vorteilhafter Weise asymmetrisch angeordnet. Die Flasche steht nicht nur sicher in dem Tray sondern sie wird auch durch die besondere Form von dem Tray "erkannt". Die Flasche muß also zu dem Tray passen.

## Beschreibung

Die Erfindung betrifft eine Mehrwegverpackung nach dem Oberbegriff des Patentanspruches 1.

Verpackungen der vorstehend genannten Art, und in Verbindung mit diesen Verpackungen zum Einsatz kommende Mehrwegsysteme, sind in den unterschiedlichsten Ausgestaltungen bekannt. Häufig zum Einsatz kommende Verpackungen aus Flaschen und Kiste weisen eine Kiste auf, die höher ist als die Flasche, so daß die Kisten ohne Abstützung auf der Flasche übereinander gestapelt werden können. In die Vertiefungen der Trays oder Kisten passen auch Flaschen, die für das entsprechende Mehrwegsystem nicht geeignet sind und daher wieder aussortiert werden müssen.

Die bekannten Mehrwegverpackungen und die mit diesen zum Einsatz kommenden Mehrwegsysteme sind relativ aufwendig und verursachen entsprechend hohe Kosten.

Der Erfindung liegt daher die Aufgabe zugrunde, eine preiswertere Mehrwegverpackung zu schaffen, die in einem insgesamt wirtschaftlicher zu verwirklichenden System zum Einsatz kommen kann und die insbesondere dem Verbraucher und sonstigen mit der Verpackung beschäftigten Personen eine "Erkennung" ermöglichen, ob die richtige Flasche für den entsprechenden Tray vorhanden ist.

Diese Aufgabe wird grundsätzlich durch das Kennzeichen des Anspruches 1 gelöst.

Erfindungsgemäß wird eine an sich bekannte Flasche eingesetzt, die beispielsweise in ihrem Bodenbereich wie eine Sektflasche ausgebildet ist, d.h. sie weist einen eingezogenen, rotationssymmetrischen Boden auf. Der kastenförmige Tray ist lediglich eine Art Wanne, deren Höhe aber sehr viel geringer ist als die Flaschenhöhe, so daß beim Stapeln Tray auf Flaschen gestapelt wird. Die tragende Funktion der Flaschen wird mit ausgenutzt.

Die Vertiefung, und insbesondere der Boden der Vertiefung, ist so gestaltet, daß die Flasche unter Berücksichtigung der Form ihres eingezogenen Bodens nicht nur sicher in dem Tray steht, sondern auch "erkannt wird". Wenn es an der Übereinstimmung zwischen dem eingezogenen Boden der Flasche und dem Vorsprung auf dem Boden der Vertiefung des Trays fehlt, so wird dieses dem Verbraucher deutlich, da die Flasche eben nicht in diesen Tray "paßt".

Erfindungsgemäß ist es entweder möglich, den Vorsprung vollständig dem eingezogenen Boden der Flasche anzupassen, d.h. ebenfalls rotationssymmetrisch auszubilden (Patentanspruch 2), oder aber der Vorsprung wird asymmetrisch auf dem Boden der Vertiefung angeordnet (Patentanspruch 3), so daß eine Flasche, die nicht eine entsprechende Form hinsichtlich ihres eingezogenen Bodens aufweist, nicht sicher steht, sondern praktisch umfällt. Dieses stellt ein besonders deutliches Signal für den Verbraucher dar, daß diese Flasche nicht zu der entsprechenden Mehrwegverpackung gehört und so ausgesondert werden muß. Es findet also damit auf einem gewissen "Umweg" eine Erziehung des Verbrauchers statt.

In vorteilhafter Weise ist die Mehrwegverpackung nach der Verpackung noch so ausgebildet, wie in Anspruch 4 angegeben. Durch diese Dimensionierung wird in Verbindung mit den Merkmalen des Patentanspruches 1 bzw. der Ansprüche 2 oder 3 ein besonders sicheres Stehen und damit eine gute Stapelfähigkeit erreicht, obwohl der Tray entsprechend flache ist und die Flaschen tragendes Element sind.

Wenn die Mehrwegverpackung so ausgebildet ist, wie in Anspruch 5 angegeben, dann versteifen die Flaschen eine entsprechend gepackte Palette diagonal in alle Richtungen. Durch die Schrägstellung der Vertiefungen erfolgt beim Ineinanderstapeln der leeren Trays eine Art Verriegelung, die beim Transport für ein Aufrechterhalten des Stapels in der gewünschten Ordnung sorgt.

Da das Tray verhältnismäßig schmal ist (z.B. Modulbreite 20 cm), ermöglicht die Schrägstellung die bessere Anordnung eines Handgriffes (Anspruch 6), da durch die Neigung der Flaschen nach außen zusätzlich Griffraum gewonnen wird. Die Oberkante des Handgriffes schließt mit der Höhe der Oberkante des Flaschenverschlusses ab.

Erfindungsgemäß wird also eine Mehrwegverpackung geschaffen, die einerseits den Verbraucher praktisch zwingt, nur die richtigen Flaschen in die richtigen Trays zu stellen und somit die Rückgabe falscher Flaschen vermeidet, wobei gleichzeitig ein preiswertes System geschaffen wird, bei dem ein flacher und damit preiswerter und gut zu transportierender Tray zum Einsatz kommt. Grundsätzlich ist es so, daß der Verbraucher lediglich die Flasche kauft und zurücktransportiert. Der Tray bleibt beim Verkäufer bzw. bei der Rücknahmestelle.

Im folgenden wird die Erfindung unter Hinweis auf die Zeichnung anhand eines Auführungsbeispieles näher erläutert.

Es zeigt:
- Fig. 1: eine perspektivische, schematische Ansicht eines Trays für eine Ausführungsform einer Mehrwegverpackung nach der Erfindung;
- Fig. 2: einen Schnitt durch den Tray der Fig. 1 gemäß der Linie A-A mit einer in eine Vertiefung einzusetzenden Flasche; und
- Fig. 3: einen Schnitt durch eine andere Ausführungsform mit geneigten Vertiefungen zur Schrägstellung der Flaschen.

Der kastenförmige Tray weist eine Höhe auf, die ungefähr einem Viertel der Höhe der Flasche entspricht. In dem mit 1 bezeichneten Tray sind eine Anzahl von Vertiefungen 2 ausgebildet, die einen Boden 4 mit einem Vorsprung 5 haben.

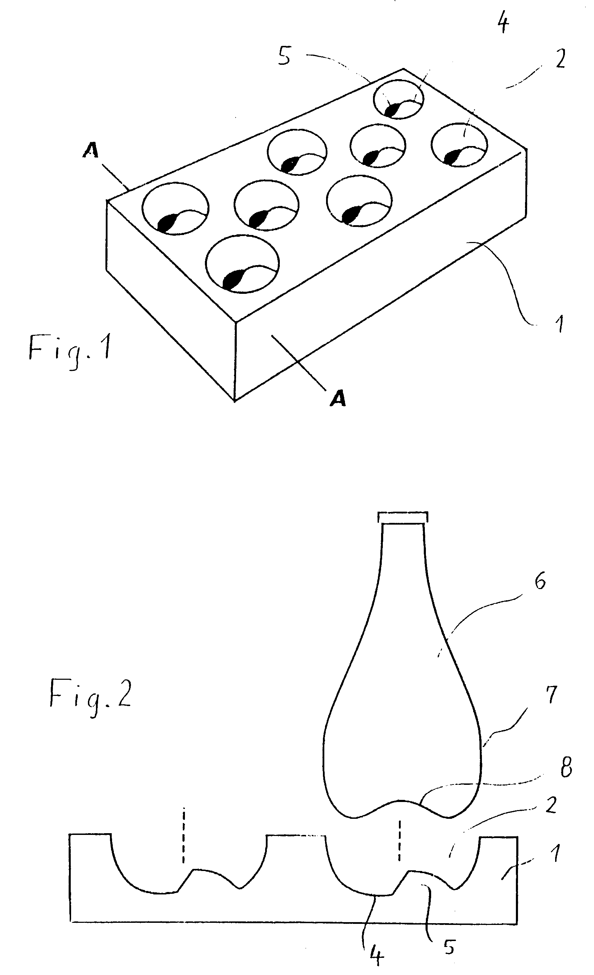

Beim Betrachten der Fig. 2 wird deutlich, daß die Flasche 6 einen relativ stark eingezogenen Boden 8 mit einer rotationssymmetrischen Form aufweist.

Wenn die Flasche 6 nun in eine Vertiefung mit einem angepaßten Vorsprung eingesetzt wird, so steht sie sicher und es paßt nur eine solche Flasche hinein, bei der die Form des Bodens 8 und der Vorsprung 5 aneinander angepaßt sind.

Bei der in der Zeichnung dargestellten Ausführungsform ist der Vorsprung 5 asymmetrisch angeordnet, so daß er zwar von der entsprechend angepaßten "richtigen" Flasche aufgenommen wird, bei einer anderen Flasche, die einen nicht-angepaßten Boden aufweist, aber ein ordnungsgemäßes Abstellen verhindert, da die Flasche praktisch umfällt. Hierdurch wird dem Verbraucher sehr deutlich signalisiert, daß es sich um die falsche Flasche handelt.

Der zylindrische Bereich 7 der Flasche in der Höhe der Öffnung der Vertiefung 2 (wenn diese eingestellt ist), weist einen Durchmesser auf, der dem Durchmesser der Öffnung entspricht. Hierdurch wird die stabile Anordnung der Flasche unterstützt. Dieses ist beispielsweise beim Stapeln mehrerer mit Flaschen gefüllter Trays wichtig.

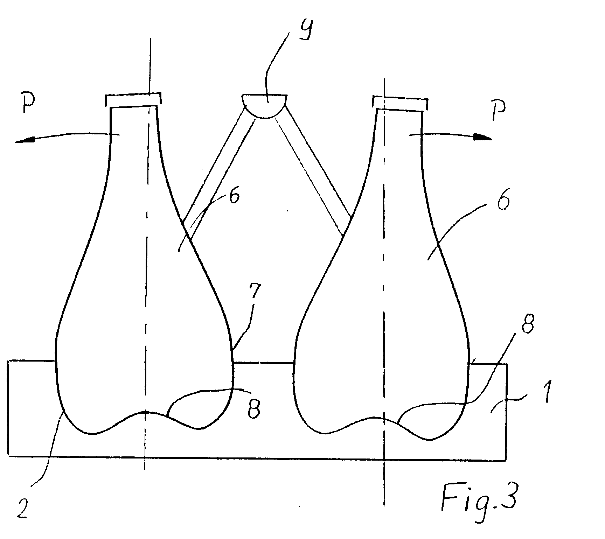

Bei der Ausführungsform nach Fig. 3 sind die Vertiefungen 2 nach außen geneigt ausgebildet, so daß auch die Flaschen 6 sich entsprechend nach außen neigen. Dieses ist auch durch die Pfeile P angedeutet. Zwischen den Flaschen ist an dem Tray in der Mitte ein Handgriff 9 angeordnet, der zusammen mit dem Tray so ausgebildet ist, daß er das Stapeln nicht behindert. In dem Tray ist ein Schlitz vorgesehen, durch den der Handgriff beim Stapeln hindurchpaßt. Der Handgriff liegt auf der Höhe des Flaschenhalses, d.h. oben wird eine gemeinsame Ebene eingenommen.

Durch die Schrägstellung wird das Stapeln der leeren Trays durch eine Art Verriegelung erleichtert, d.h. es verhindert, daß die gestapelten Trays in unerwünschter Weise sich wieder voneinander trennen. Durch die Neigung der Flaschen erfolgt eine Versteifung beim Stapeln der Verpackung auf einer Palette oder dergleichen.

## Patentansprüche

1. Mehrwegverpackung, bestehend aus mindestens einer Flasche (6) und einem kastenförmigen Tray (1), dessen Höhe geringer ist als diejenige der Flasche und der mit Vertiefungen (2) zur Aufnahme der Flaschen versehen ist,
dadurch gekennzeichnet, daß jede Flasche (6) einen eingezogenen, rotationssymmetrischen Boden (8) (female) aufweist, und
daß der Boden jeder Vertiefung (2) einen der Form des eingezogenen Flaschenbodens (8) angepaßten Vorsprung (5) (male) aufweist.

2. Mehrwegverpackung nach Anspruch 1, dadurch gekennzeichnet, daß der Vorsprung (5) der Form des eingezogenen Bodens (8) vollständig formschlüssig angepaßt ist.

3. Mehrwegverpackung nach Anspruch 1, dadurch gekennzeichnet, daß der Vorsprung (5) asymmetrisch auf dem Boden (4) der Vertiefung (2) angeordnet ist.

4. Mehrwegverpackung nach einem oder mehreren der vorstehenden Ansprüche, dadurch gekennzeichnet, daß der Durchmesser der Flasche (6) auf dem Höhenquerschnitt (7), der in der Ebene der Öffnung der Vertiefung (2) liegt, gleich dem Durchmesser der Öffnung der Vertiefung ist.

5. Mehrwegverpackung nach einem oder mehreren der vorstehenden Ansprüche, dadurch gekennzeichnet, daß die Vertiefungen (2) seitlich zu einer Längsachse des kastenförmigen Trays (1) nach außen geneigt sind.

6. Mehrwegverpackung nach einem oder mehreren der vorstehenden Ansprüche, dadurch gekennzeichnet, daß an dem Tray ein Handgriff (9) vorgesehen ist, dessen Höhe auf der Oberkante des Flaschenverschlusses (6) liegt.
